# FASCICULE DE BREVET EUROPEEN

(11) **EP 2 286 246 B1**
(45) Date de publication et mention de la délivrance du brevet: **05.12.2012**
(21) Numéro de dépôt: 09772638.4
(22) Date de dépôt: 26.05.2009
(51) Int. Cl.: G01N 35/00, B25J 15/12

(54) **DISPOSITIF DE PREHENSION D'UNE CUVETTE DE REACTION**
VORRICHTUNG ZUM HALTEN EINES REAKTIONSGEFÄSSES
DEVICE FOR HOLDING A REACTION VESSEL

(30) Priorité: 09.06.2008 FR 0803196
(43) Date de publication de la demande: 23.02.2011
(73) Titulaire: Diagnostica Stago, 92600 Asnières (FR)
(72) Inventeur: FÜRLE, Thomas, F-95220 Herblay (FR); CROISARD, Philippe, F-78260 Acheres (FR)
(74) Mandataire: Ramey, Daniel
(86) Numéro de dépôt international: PCT/FR2009/000603
(87) Numéro de publication internationale: WO 2010/000955

(56) Documents cités:
- WO-A-00/38046
- WO-A-00/48005
- WO-A-93/16849
- WO-A-95/01297
- JP-A- 61 241 940
- JP-A- 2001 246 267
- JP-A- 2003 128 242
- US-A1- 2002 102 736

## Description

L'invention concerne un dispositif de préhension d'une cuvette de réaction, en particulier dans un appareil d'analyse automatique d'échantillons chimiques ou biologiques.

Les documents EP-A-325874 et WO-A-03/065047 décrivent des cuvettes de réaction utilisées pour la détermination des temps de modification de l'état physique d'un milieu, en particulier pour la détermination du temps de coagulation d'un échantillon de sang, ces cuvettes étant ouvertes à leur extrémité supérieure et comportant un fond incurvé formant un chemin de roulement d'une bille de matériau ferromagnétique qui est déplaçable dans la cuvette en mouvement périodique au moyen d'un champ magnétique extérieur, les variations d'amplitude et/ou de fréquence des déplacements de la bille étant représentatives de l'état physique de l'échantillon de sang.

Les appareils dans lesquels ces cuvettes sont utilisées, comprennent des dispositifs de préhension permettant de saisir les cuvettes et de les transporter en divers points, par exemple pour les amener dans un incubateur puis dans une zone de mesure et enfin dans un récipient de stockage avant destruction. Les dispositifs de préhension actuels sont du type à aspiration pneumatique et comprennent chacun deux ventouses qui doivent être placées sur des picots de l'extrémité supérieure d'une cuvette.

Lorsque les ventouses sont reliées à l'aspiration pneumatique, la cuvette est fermement tenue par le dispositif de préhension et peut être transportée de façon sûre d'un point à un autre dans l'appareil.

Il faut cependant que les ventouses soient positionnées avec précision sur les picots de la cuvette, ce qui n'est pas toujours le cas, aucun moyen n'étant prévu pour assurer un positionnement précis du dispositif de préhension sur la cuvette.

L'utilisation de ventouses, qui sont susceptibles de s'user plus ou moins rapidement, et d'une aspiration pneumatique complique par ailleurs ces dispositifs de préhension et réduit leur fiabilité et leur durée de vie.

Les documents US2002102736 et JP61241940 décrivent des dispositifs de préhension d'objets sphériques ou cylindriques, comprenant des pattes élastiques déformables destinées à s'engager sur l'objet.

L'invention a notamment pour but d'apporter une solution simple, efficace et économique à ces problèmes.

Elle propose à cet effet un dispositif de préhension d'une cuvette de réaction, selon la revendication 1.

Le dispositif selon l'invention est donc essentiellement mécanique et ne nécessite plus de liaison à des moyens d'aspiration pneumatique ou l'utilisation de ventouses, de sorte que les inconvénients liés à ces moyens de la technique antérieure sont éliminés.

Les moyens de positionnement et de centrage de la tête de préhension peuvent être formés sur les parois latérales de ce profilé en U et comprennent des éléments en saillie, destinés à s'engager dans des cavités ou échancrures complémentaires des bords latéraux supérieurs de la cuvette.

Avantageusement, les pattes élastiquement déformables de la tête de préhension ont des extrémités inférieures en biseau qui sont destinées à glisser sur les bords supérieurs de la cuvette quand la tête de préhension est appliquée sur la cuvette.

Ces extrémités en biseau permettent à la fois un centrage en direction transversale de la tête de préhension sur la cuvette et un serrage élastique de l'extrémité supérieure de la cuvette entre les pattes élastiquement déformables de la tête de préhension.

De plus, ces extrémités en biseau des pattes de la tête de préhension forment des crochets d'encliquetage sur des rebords de l'extrémité supérieure de la cuvette ou des becs d'appui sur les parois latérales de la cuvette.

Selon une autre caractéristique de l'invention, le dispositif comprend des moyens de séparation de la tête de préhension et de la cuvette, constitués d'un poussoir déplaçable par des moyens de commande entre une position inactive supérieure, où le poussoir est à l'intérieur de la tête de préhension, et une position inférieure active où il s'appuie sur l'extrémité supérieure dé la cuvette et l'écarte de la tête de préhension.

Dans le mode de réalisation précité de l'invention, le poussoir est, dans sa position supérieure inactive, logé à l'intérieur du profilé en U.

Avantageusement, les moyens de commande de ce poussoir sont électromagnétiques, le poussoir étant par exemple lié au noyau mobile d'un électro-aimant, ou pneumatiques.

Selon encore une autre caractéristique de l'invention, la tête de préhension comprend des moyens de détection de cuvette.

Ces moyens permettent de confirmer qu'une cuvette a bien été saisie par le dispositif de préhension.

Dans un mode de réalisation particulièrement simple, ces moyens de détection comprennent un doigt guidé en translation dans un orifice de la tête de préhension entre une position inférieure correspondant à une absence de cuvette et une position supérieure dans laquelle il est repoussé par une cuvette saisie par la tête de préhension.

Ce doigt mobile peut être associé à un commutateur qui change d'état de conduction électrique quand le doigt est déplacé d'une de ses positions dans l'autre.

L'invention s'applique à une cuvette de réaction destinée à être utilisée dans un appareil automatique d'analyse équipé d'un dispositif de préhension du type décrit ci-dessus, cette cuvette ayant une forme générale parallélépipédique rectangle et une extrémité supérieure ouverte, son extrémité supérieure comportant des éléments en saillie et/ou des découpes ou échancrures de positionnement et de centrage, formés sur les bords supérieurs de ses parois latérales ou sur des rebords de ses parois latérales.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'un dispositif de préhension selon l'invention ;
- la figure 2 est une vue partielle agrandie de la tête de ce dispositif ;
- la figure 3 représente schématiquement une cuvette de réaction utilisable avec la tête de préhension des figures 1 et 2 ;
- les figures 4 et 5 représentent une variante de réalisation de la tête de préhension et de la cuvette correspondante ;
- les figures 6 et 7 représentent une autre variante de réalisation d'une tête de préhension et de la cuvette de réaction correspondante ;
- les figures 8 à 12 représentent différentes variantes de réalisation des cuvettes de réaction.

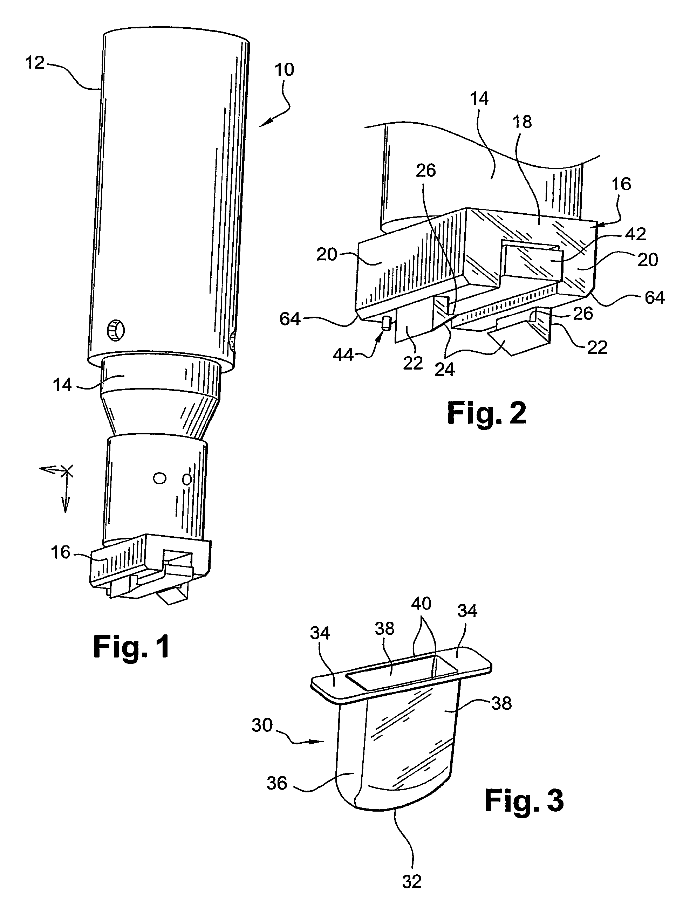

On a représenté schématiquement en figure 1 un dispositif 10 de préhension d'une cuvette de réaction dans un appareil automatique d'analyse du type décrit plus haut, ce dispositif comprenant un corps 12 dans lequel est monté un élément 14 portant une tête 16 de préhension de cuvette à son extrémité inférieure, l'élément 14 et la tête 16 étant déplaçables par une pression de fluide ou par un moteur électrique.

La tête de préhension 16, qui est mieux visible en figure 2, comprend un profilé en U 18 à section ouverte vers le bas, dont les deux parois latérales verticales 20 comprennent chacune une patte 22 s'étendant vers le bas depuis l'extrémité inférieure de la paroi latérale 20 correspondante. Ces pattes 22 ont des extrémités inférieures 24 en biseau, les deux faces en biseau de ces pattes étant en regard l'une de l'autre et s'écartant l'une de l'autre vers le bas, leur extrémité supérieure étant reliée par une face plane horizontale 26 à la patte 22 correspondante en formant ainsi un bec ou un crochet à section triangulaire.

Cette tête de préhension peut être utilisé sur des cuvettes de réaction de formes diverses, dont l'une est représentée à titre d'exemple en figure 3. Cette cuvette 30 d'un type connu est de forme générale parallélépipédique rectangle, son extrémité inférieure étant fermée par un fond 32 arrondi, son extrémité supérieure étant ouverte et encadrée par deux rebords latéraux 34 raccordés à ses petites faces latérales 36.

Lorsque le dispositif 10 est utilisé pour la préhension de la cuvette 30, la tête de préhension 16 est positionnée au-dessus de la cuvette 30 de telle sorte que les parois latérales 20 du profilé 18 sont dans l'alignement des grandes parois latérales 38 de la cuvette. Lorsque la tête 16 est descendue verticalement sur la cuvette 30, les faces en biseau 24 des pattes 22 s'appuient sur les bords supérieurs 40 des grandes faces latérales 38 de la cuvette et glissent sur ces bords, les pattes 22 s'écartant légèrement l'une de l'autre vers l'extérieur jusqu'à ce que les faces inférieures des parois latérales 20 du profilé 18 soient en appui sur les bords supérieurs 40 de la cuvette. Celle-ci est alors serrée entre les bords horizontaux supérieurs des faces en biseau 24 des pattes 22 de la tête de préhension et la cuvette 30 peut être déplacée sans risque d'un point à l'autre de l'appareil d'analyse.

La tête de préhension 16 comprend également des moyens de libération de la cuvette, qui sont constitués ici par un poussoir 42 monté dans la tête de préhension 16 entre les parois latérales 20 du profilé en U 18. Ce poussoir 42 peut être formé d'un bloc parallélépipédique qui est relié au noyau mobile d'un électro-aimant logé à l'intérieur de l'élément 14 du dispositif de préhension.

Lorsque le poussoir 42 est dans une position supérieure représentée en figure 2, il est légèrement écarté de l'extrémité supérieure d'une cuvette 30, tenue par la tête de préhension 16. L'excitation de l'électro-aimant provoque la descente du poussoir 42 qui vient alors appuyer sur l'extrémité supérieure de la cuvette 30, c'est-à-dire sur les bords supérieurs 40 et les rebords latéraux 34 et pousse la cuvette vers le bas jusqu'à ce que celle-ci sorte des pattes 22 de la tête de préhension.

Lorsque l'électro-aimant est désexcité, le poussoir 42 est ramené en position supérieure par un ressort de rappel.

En variante, la commande du poussoir 42 est pneumatique. Cette commande comprend en outre une sécurité pour éviter qu'une cuvette soit éjectée de la tête de préhension en cas de panne électrique ou autre, et risque de contaminer l'appareil d'analyse.

Le dispositif selon l'invention peut également être équipé d'un capteur de détection de la présence d'une cuvette 30 entre les pattes latérales 22 de la tête de préhension. Ce capteur comprend par exemple, comme représenté schématiquement en figure 2, un doigt mobile 44 qui est guidé dans un orifice de la face horizontale inférieure d'une patte 20 et qui est associé à un commutateur et à un ressort de rappel logés à l'intérieur du profilé en U 18 de façon à ce que, quand une cuvette 30 est tenue par la tête de préhension 10, une partie de l'extrémité supérieure de cette cuvette, par exemple l'un de ses rebords latéraux 34, appuie sur le doigt 44 et le pousse à l'intérieur du profilé 18 en modifiant l'état de conduction électrique du commutateur associé au doigt mobile 44.

Lorsque la cuvette 30 est libérée par la tête de préhension, le ressort de rappel repousse le doigt 44 vers le bas dans sa position en saillie sur la face inférieure de la paroi latérale 20 du profilé 18.

Lorsque la tête de préhension 16 de la figure 2 est utilisée pour saisir une cuvette 30 telle que celle représentée en figure 3, la cuvette est automatiquement centrée sur la tête de préhension dans une direction transversale perpendiculaire à ses grandes faces latérales 38, du fait de son serrage entre les deux pattes 22 élastiquement déformables.

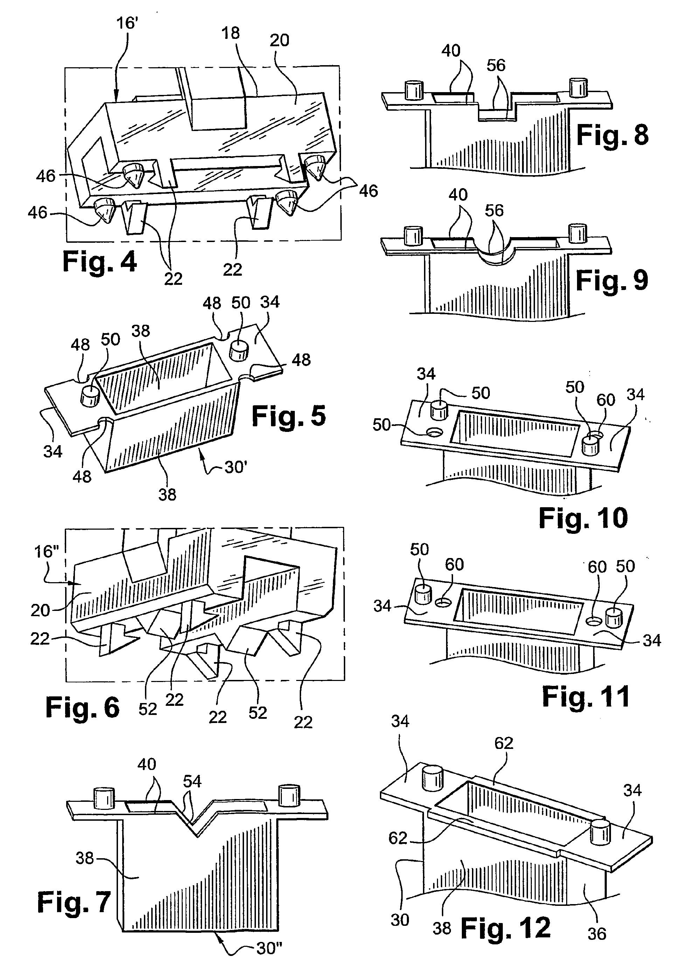

Des moyens de centrage de la cuvette dans une direction longitudinale peuvent également être prévus sur la tête de préhension, comme représenté par exemple aux figures 4 et 6.

La tête de préhension 16' de la figure 4 comprend un profilé en U 18 dont les parois latérales 20 sont prolongées vers le bas chacune par deux pattes latérales 22 élastiquement déformables et par deux picots tronconiques 46 situés au voisinage des extrémités longitudinales des parois 20. Ces picots tronconiques 46 sont destinés à s'engager dans des découpes ou échancrures semi-circulaires 48 des rebords latéraux 34 de la cuvette 30' représentée en figure 5. Les picots tronconiques 46 et les échancrures 48 assurent le centrage de la cuvette 30' dans la tête de préhension 16' dans une direction longitudinale parallèle aux grandes faces 38 de la cuvette, ainsi que dans une direction transversale perpendiculaire à ces grandes face.

On voit en figure 5 que les rebords latéraux 34 de la cuvette comportent également chacun un picot cylindrique 50 en saillie, les picots 50 servant, d'une façon connue, à fixer la cuvette 30 sur une bande allongée de matière plastique permettant de former une chaîne de cuvettes reliées les unes aux autres par la bande de matière plastique, cette disposition permettant l'alimentation de l'appareil d'analyse par une bobine contenant un enroulement d'une bande de grande longueur portant un très grand nombre de cuvettes 30.

La tête de préhension 16" de la figure 6 comprend également un profilé en U 18 dont les parois latérales 20 sont prolongées chacune vers le bas par deux pattes élastiquement déformables 22 et par un élément à section triangulaire en saillie 52 dont le sommet est orienté vers le bas, cet élément 52 étant situé entre les deux pattes latérales 22 de la paroi latérale 20 et étant destiné à s'engager dans une échancrure triangulaire 54 des bords supérieurs 40 des grandes faces latérales 38 de la cuvette 30" de la figure 7.

Ces éléments triangulaires 52 assurent le positionnement longitudinal de la cuvette 30" sur la tête de préhension 16". Le positionnement transversal de cette cuvette sur la tête de préhension est assuré par les pattes élastiquement déformables 22 dont les crochets s'appuient sur les grandes parois latérales 38 de la cuvette.

Dans les variantes de réalisation des figures 8 et 9, les échancrures des bords supérieurs 40 de la cuvette ont une forme rectangulaire 56 ou en arc de cercle 58, respectivement. Les éléments en saillie 52 du profilé de la tête de préhension ont bien entendu une forme rectangulaire ou en arc de cercle correspondante.

Dans la variante de réalisation de la figure 10, les rebords latéraux 34 de la cuvette 30 comportent chacun un pion cylindrique 50 et un trou circulaire 60 qui sont transversalement alignés. De plus, d'un rebord latéral 34 à l'autre, les deux pions cylindriques 50 sont alignés en diagonale et les deux trous circulaires 60 sont également alignés en diagonale.

Dans ce cas, les extrémités longitudinales des pattes 20 du profilé en U de la tête de préhension comprennent chacune un orifice cylindrique de réception d'un pion 50 de la cuvette et un doigt tronconique destiné à s'engager dans un trou circulaire 60 d'un rebord 34 de la cuvette.

Dans la variante de réalisation de la figure 11, chaque rebord latéral 34 de la cuvette comprend un pion cylindrique 50 et un trou circulaire 60 qui sont alignés en direction longitudinale et qui sont destinés à coopérer avec un orifice cylindrique et un doigt tronconique des extrémités longitudinales de la tête de préhension.

Une autre variante de réalisation d'une cuvette 30 est représentée en figure 12, la cuvette comprenant, outre les deux rebords 34 rattachés à ses petites faces 36, deux rebords latéraux 62 rattachés à ses grandes faces latérales 38, ces deux rebords latéraux 62 ayant une faible largeur ou dimension transversale.

Les deux rebords latéraux 62 coopèrent par encliquetage avec les pattes élastiquement déformables 22 de la tête de préhension, les crochets de ces pattes 22 venant s'engager sous les rebords latéraux 62 lorsque la tête de préhension est descendue sur la cuvette 30.

Pour libérer la cuvette 30 de la tête de préhension, il suffit, comme dans les modes de réalisation précédents, de faire descendre le poussoir 42 qui vient s'appliquer sur les rebords latéraux 62 de la cuvette et pousse celle-ci hors des pattes élastiquement déformables 22 de la tête de préhension.

On notera que, grâce à leurs quatre pattes élastiquement déformables 22, les têtes de préhension des figures 4 et 6 sont encore capables de fonctionner correctement en cas de rupture d'une de ces pattes.

Par ailleurs, il est avantageux que les extrémités inférieures des parois 20 du profilé 18 de la tête de préhension soient chanfreinées ou convexes sur leur face extérieure, comme représenté en 64 aux figures 2 et 6, car cela permet un positionnement et un centrage de la tête de préhension elle-même sur certains éléments d'un appareil d'analyse, comme par exemple sur une navette de transport de cuvette ou sur une plaque d'incubation ou de mesure.

Les extrémités chanfreinées ou incurvées convexes 64 des parois 20 du profilé permettent un rattrapage des dispersions de côtes et de tolérances pour le positionnement précis de la tête de préhension sur une navette ou une plaque d'incubation et de mesure, en vue de la prise ou de la pose d'une cuvette.

Des essais ont permis de vérifier que la courses des becs sur les parois latérales 38 d'une cuvette doit être d'au moins 0,3 à 0,5 mm et est de préférence de 1,5 à 2 mm pour une bonne préhension de la cuvette.

La tête de préhension selon l'invention a été soumise à des essais de fiabilité et de robustesse qui ont permis de constater les résultats suivants :
- aucun défaut de fonctionnement après plus de 50.000 prises de cuvette ;
- une durée de vie d'au moins 500.000 prises de cuvette.

## Revendications

1. Dispositif de préhension d'une cuvette de réaction, en particulier dans un appareil automatique d'analyse d'échantillons chimiques ou biologiques comprenant des moyens d'application d'une tête de préhension sur l'extrémité supérieure de la cuvette (30), et des moyens de solidarisation de cette tête et de la cuvette, **caractérisé en ce que**, la cuvette ayant une forme générale parallélépipédique rectangle et une extrémité supérieure ouverte, la tête de préhension (16, 16', 16") comprend un profilé (18) en U à section ouverte vers le bas, destiné à recouvrir l'extrémité supérieure de la cuvette (30) et ayant des parois latérales (20) dont dépendent des pattes élastiquement déformables (22) destinées à s'engager sur des bords de l'extrémité supérieure de la cuvette (30, 30', 30") quand la tête est appliquée sur la cuvette et à tenir la cuvette par pincement élastique, le profilé (18) comportant également des moyens (46, 52) de positionnement et de centrage de la tête de préhension sur l'extrémité supérieure de la cuvette (30).

2. Dispositif selon la revendication 1, **caractérisé en ce que** les moyens de positionnement et de centrage (46, 52) sont du type à coopération de formes.

3. Dispositif selon la des revendication 1 ou 2 , **caractérisé en ce que** les moyens de positionnement et de centrage (46, 52) sont formés sur les parois latérales (20) du profilé en U et comprennent des éléments en saillie destinés à coopérer avec des cavités ou des échancrures (48, 54, 56, 58) complémentaires des bords supérieurs de la cuvette (30', 30").

4. Dispositif selon l'une des revendications précédentes, **caractérisé en ce que** les pattes élastiquement déformables (22) de la tête de préhension ont des extrémités inférieures (24) en biseau destinées à glisser sur les bords supérieurs (40) de la cuvette quand la tête de préhension est appliquée sur la cuvette.

5. Dispositif selon la revendication 4, **caractérisé en ce que** les extrémités en biseau (24) des pattes (22) forment des crochets d'encliquetage sur des rebords latéraux (62) de l'extrémité supérieure de la cuvette (30) ou des becs d'appui sur les parois latérales (38) de la cuvette.

6. Dispositif selon l'une des revendications précédentes, **caractérisé en ce que** la tête de préhension comprend un poussoir (42) déplaçable par des moyens de commande entre une position inactive supérieure où le poussoir est à l'intérieur de la tête de préhension, et une position inférieure active où il s'appuie sur l'extrémité supérieure d'une cuvette (30) et la dégage de la tête de préhension.

7. Dispositif selon la revendication 6 , **caractérisé en ce que** le poussoir (42) dans sa position supérieure inactive, est logé à l'intérieur du profilé en U (18).

8. Dispositif selon la revendication 6 ou 7, **caractérisé en ce que** les moyens de commande du poussoir sont électromagnétiques ou pneumatiques.

9. Dispositif selon l'une des revendications précédentes, **caractérisé en ce que** la tête de préhension comprend des moyens (44) de détection de cuvette.

10. Dispositif selon la revendication 9, **caractérisé en ce que** les moyens de détection comprennent un doigt (44) guidé en translation dans un orifice de la tête de préhension entre une position inférieure correspondant à l'absence de cuvette dans la tête de préhension et une position supérieure dans laquelle il est repoussé par une cuvette tenue par la tête de préhension.

11. Dispositif selon la revendication 10, **caractérisé en ce que** le doigt mobile (44) est associé à un commutateur qui change d'état de conduction électrique quand le doigt (44) est déplacé d'une de ses positions dans l'autre.

12. Dispositif selon l'une des revendications 1 à 11, **caractérisé en ce que** les extrémités inférieures (64) des parois (20) du profilé sont chanfreinées ou incurvées convexes.

## Claims

1. A gripper device for gripping a reaction cuvette, in particular in an automatic appliance for analyzing chemical or biological samples and including means for applying a gripper head to the top end of a cuvette (30), and means for securing said head to the cuvette, the device being **characterized in that** the cuvette being generally in the form of a rectangular parallelepiped and its top end being opened, the gripper head (16, 16', 16") comprises a channel-section member (18) of downwardly-open section for covering the top end of the cuvette (30) and having side flanges (20) from which depend elastically-deformable tabs (22) for engaging the top end edges of the cuvette (30, 30', 30") when the head is pressed against the cuvette and for holding the cuvette by resilient clamping, and the section member (18) comprising also positioning and centering means (46, 52) for positioning and centering the gripper head on the top end of the cuvette (30).

2. A device according to claim 1, **characterized in that** the positioning and centering means (46, 52) are of the type involving co-operating shapes.

3. A device according to any one of claims 1 or 2, **characterized in that** the positioning and centering means (46, 52) are formed on the side flanges (20) of the channel-section member and comprise projecting elements for co-operating with complementary cavities or notches (48, 54, 56, 58) in the top edges of the cuvette (30', 30").

4. A device according to any preceding claim, **characterized in that** the elastically-deformable tabs (22) of the gripper head have chamfered bottom ends (24) for sliding over the top edges (40) of the cuvette when the gripper head is applied to the cuvette.

5. A device according to claim 4, **characterized in that** the chamfered ends (24) of the tabs (22) form snap-fastening hooks for engaging side rims (62) on the top end of the cuvette (30) or tips for bearing against the side walls (38) of the cuvette.

6. A device according to any preceding claim, **characterized in that** the gripper head includes a pusher (42) movable by control means between a high, inactive position in which the pusher is inside the gripper head, and a low, active position in which it presses against the top end of a cuvette (30) and disengages it from the gripper head.

7. A device according to claim 6, **characterized in that** the pusher (42) in its high, inactive position is housed inside the channel-section member (18).

8. A device according to claim 6 or claim 7, **characterized in that** the pusher control means are electromagnetic or pneumatic.

9. A device according to any preceding claim, **characterized in that** the gripper head includes detector means (44) for detecting a cuvette.

10. A device according to claim 9, **characterized in that** the detector means comprise a finger (44) guided to move in translation through an orifice in the gripper head between a low position corresponding to the absence of a cuvette in the gripper head, and a high position into which it is pushed by a cuvette held by the gripper head.

11. A device according to claim 10, **characterized in that** the movable finger (44) is associated with a switch that changes its electrical conduction state when the finger (44) is moved from one of its positions to the other.

12. A device according to any one of claims 1 to 11, **characterized in that** the bottom ends (64) of the walls (20) of the section member have convex curves or chamfers.

## Patentansprüche

1. Vorrichtung zum Ergreifen eines Reaktionsgefäßes, insbesondere bei einer automatischen Analyseeinrichtung zur Analyse von chemischen oder biologischen Proben, mit Mitteln zum Ansetzen eines Greifkopfes an das obere Ende des Gefäßes (30) und mit Mitteln zum festen Verbinden dieses Kopfes mit dem Gefäß, **dadurch gekennzeichnet, dass** bei einem Gefäß in Form eines Quaders mit einem offenen, oberen Ende der Greifkopf (16, 16', 16") ein U-förmiges Profil (18) mit sich nach unten öffnendem Querschnitt aufweist, das dazu bestimmt ist, das obere Ende des Gefäßes (30) zu überdecken, und Seitenwände (20) aufweist, mit denen elastisch verformbare Laschen (22) zusammenhängen, die dazu bestimmt sind, an Randkanten des oberen Endes des Gefäßes (30, 30', 30") dann anzugreifen, wenn der Kopf an das Gefäß angesetzt ist, und das Gefäß durch elastisches Einspannen zu halten, wobei das Profil (18) auch Mittel (46, 52) zum Positionieren und Zentrieren des Greifkopfes am oberen Ende des Gefäßes (30) aufweist.

2. Vorrichtung nach Anspruch 1, **dadurch gekennzeichnet, dass** die Positionier- und Zentriennittel (46, 52) formschlüssig ausgeführt sind.

3. Vorrichtung nach Anspruch 1 oder 2, **dadurch gekennzeichnet, dass** die Positionier- und Zentriennittel (46, 52) an den Seitenwänden (20) des U-formigen Profils ausgebildet sind und vorspringende Teile aufweisen, die dazu bestimmt sind, mit komplementären Hohlräumen bzw. Aussparungen (48, 54, 56, 58) der oberen Randkanten des Gefäßes (30', 30") zusammenzuwirken.

4. Vorrichtung nach einem der vorangehenden Ansprüche, **dadurch gekennzeichnet, dass** die elastisch verformbaren Laschen (22) des Greifkopfes abgeschrägt ausgeführte untere Enden (24) aufweisen, die dazu bestimmt sind, auf die oberen Randkanten (40) des Gefäßes dann zu gleiten, wenn der Greifkopf an das Gefäß angesetzt wird.

5. Vorrichtung nach Anspruch 4, **dadurch gekennzeichnet, dass** die abgeschrägt ausgeführten Enden (24) der Laschen (22) Einschnapphaken zum Einschnappen an Seitenflansche (62) des oberen Endes des Gefäßes (30) bzw. Andrücknasen zum Andrücken an die Seitenwände (38) des Gefäßes bilden.

6. Vorrichtung nach einem der vorangehenden Ansprüche, **dadurch gekennzeichnet, dass** der Greifkopf einen Schieber (42) aufweist, der über Steuermittel zwischen einer oberen, inaktiven Stellung, wo der Schieber sich innerhalb des Greifkopfes befindet, und einer unteren, aktiven Stellung verstellbar ist, wo er an das obere Ende eines Gefäßes (30) drückt und es aus dem Greifkopf freigibt.

7. Vorrichtung nach Anspruch 6, **dadurch gekennzeichnet, dass** der Schieber (42) in seiner oberen, inaktiven Stellung innerhalb des U-förmigen Profils (18) aufgenommen ist.

8. Vorrichtung nach Anspruch 6 oder 7, **dadurch gekennzeichnet, dass** die Steuermittel zum Steuern des Schiebers elektromagnetisch oder pneumatisch ausgeführt sind.

9. Vorrichtung nach einem der vorangehenden Ansprüche, **dadurch gekennzeichnet, dass** der Gleitkopf Mittel (44) zum Erfassen eines Gefäßes aufweist.

10. Vorrichtung nach Anspruch 9, **dadurch gekennzeichnet, dass** die Erfassungsmittel einen Finger (44) aufweisen, der in einer Öffnung des Greifkopfes zwischen einer unteren Stellung, die einem fehlenden Gefäß im Greifkopf entspricht, und einer oberen Stellung verschiebbar gefühl ist, in welcher er von einem im Greitkopf festgehaltenen Gefäß zurückgeschoben ist.

11. Vorrichtung nach Anspruch 10, **dadurch gekennzeichnet, dass** dem beweglichen Finger (44) ein Schalter zugeordnet ist, der den Stromleitzustand dann ändert, wenn der Finger (44) von der einen Stellung in die andere verschoben wird.

12. Vorrichtung nach einem der Ansprüche 1 bis 11, **dadurch gekennzeichnet, dass** die unteren Enden (64) der Wände (20) des Profils abgeschrägt bzw. konvex gekrümmt sind.
